# EUROPÄISCHE PATENTANMELDUNG

(11) **EP 1 583 195 A1**
(43) Veröffentlichungstag der Anmeldung: **05.10.2005**
(21) Anmeldenummer: 05004867.7
(22) Anmeldetag: 05.03.2005
(51) Int. Cl.: H02G 3/18

(54) **Unterflurkassette**

(30) Priorität: 30.03.2004 DE 202004005340 U
(71) Anmelder: Novar GmbH, 72458 Albstadt-Ebingen (DE)
(72) Erfinder: Raschke, Jörg, 51674 Wiehl (DE)
(74) Vertreter: Patentanwälte Ruff, Wilhelm, Beier, Dauster & Partner

(57) **Zusammenfassung**

2.1. Die Erfindung betrifft eine Unterflurkassette zum Anordnen von Gerätebechern und Installationsgeräten mit einer Basis (12) und einem um die Basis (12) umlaufenden Rand (14) zum Aufnehmen eines Deckels (24), wobei der Rand (14) mittels eines einstückigen Blechstreifens ausgebildet ist und mittels passender Vorsprünge (18) und/oder Ausnehmungen (20) an der Basis (12) formschlüssig gesichert ist.
2.2. Erfindungsgemäß ist eine der Basis (12) abgewandte Kante des Blechstreifens von einem Mittelpunkt der Basis (12) weg nach außen umgebördelt.

## Beschreibung

Die Erfindung betrifft eine Unterflurkassette zum Anordnen von Gerätebechern und Installationsgeräten, mit einer Basis und einem um die Basis umlaufenden Rand zum Aufnehmen eines Deckels, wobei der Rand mittels eines einstückigen Blechstreifens ausgebildet ist und mittels passender Vorsprünge und/oder Ausnehmungen an der Basis formschlüssig gesichert ist.

Aus dem deutschen Gebrauchsmuster DE 201 17 522 U1 ist eine Unterflurkassette zum Anordnen von Gerätebechern bekannt, die aus einer Basis und einem um die Basis umlaufenden Rand zum Aufnehmen eines Deckels besteht. Die Basis ist als Blechbiege- und Blechstanzteil aus einer einstückigen Blechplatine gebildet und der umlaufende Rand ist mittels eines einstückigen Blechstreifens ausgebildet. Die Basisplatte weist radial abragende Vorsprünge auf, die von passenden Ausnehmungen an einer unteren Kante des umlaufenden Randes aufgenommen sind. Die Stirnseiten des einstückigen Blechstreifens sind mittels einer schwalbenschwanzartigen Konstruktion miteinander verbunden.

Mit der Erfindung soll eine stabile und dabei kostengünstig herstellbare Unterflurkassette geschaffen werden.

Erfindungsgemäß ist hierzu eine Unterflurkassette zum Anordnen von Gerätebechern mit einer Basis und einem um die Basis umlaufenden Rand zum Aufnehmen eines Deckels vorgesehen, wobei der Rand mittels einen einstückigen Blechstreifens ausgebildet ist und mittels passender Vorsprünge und/oder Ausnehmungen an der Basis formschlüssig gesichert ist, bei der eine der Basis abgewandte Kante des Blechstreifens von einem Mittelpunkt der Basis weg nach außen umgebördelt ist.

Durch die Umbördelung der Kante des umlaufenden Randes entsteht ein sehr formstabiler umlaufender Rand, der auch härtesten Beanspruchungen standhält. Durch die formschlüssige Verbindung lässt sich der Blechstreifen in sehr stabiler Weise an der Basis sichern. Aufgrund der sehr formstabilen Gestaltung des umlaufenden Randes muss der Blechstreifen geeignet aufgebogen werden und schnappt dann beispielsweise selbsttätig in seine, an der Basis gesicherte Position. Überraschenderweise hat sich bei der Erfindung gezeigt, dass die Kombination eines sehr formstabilen Randes mit einer formschlüssigen Verbindung des Randes mit der Basis zwar die Montage des Randes an der Basis gegenüber einem weniger steifen Rand, beispielsweise in Form eines Blechstreifens ohne Umbördelung, erschwert, die erhöhte Stabilität der Unterflurkassette im zusammengebauten Zustand diese Nachteile aber aufwiegt. Durch die Umbördelung des umlaufenden Randes wird darüber hinaus ein Teppich- oder Bodenschutzrahmen gebildet. Unter einer umgebördelten oder abgebogenen Kante wird dabei die Anordnung der Kante in einem Winkel zum übrigen Blechstreifen verstanden, unabhängig davon, wie die Winkelanordnung letztendlich hergestellt wird. Zweckmäßigerweise wird die abgebogene Kante in einem rechten Winkel zum übrigen Blechstreifen angeordnet, wobei auch ein Abbiegen um mehr als 90°, so dass die abgebogene Kante und der übrige Blechstreifen einen Winkel von weniger als 90° einschließen, besonders vorteilhaft sein kann, insbesondere bei flexiblen Bodenbelägen.

In Weiterbildung der Erfindung ist der, den umlaufenden Rand bildende Blechstreifen in einem an der Basis anliegenden, umlaufenden Bereich gegen die Basis vorgespannt.

Durch Vorspannen des Randes gegen die Basis kann die Stabilität noch weiter erhöht werden. Speziell bei runden Unterflurkassetten kann dadurch auch ohne stoffschlüssige Verbindung von Basis und Rand, wie sie beispielsweise durch Schweißen erreicht wird, ein äußerst stabiler Verbund geschaffen werden.

In Weiterbildung der Erfindung ist der einstückige Blechstreifen mit verschweißten Stirnseiten ausgebildet, wobei die Stirnseiten des Blechstreifens nach dem Sichern des Blechstreifens an der Basis miteinander verschweißt werden.

Durch Verschweißen im montierten Zustand des Randes ist dessen Montage erleichtert und nach dem Verschweißen der Stirnseiten ist der Rand unlösbar mit der Basis verbunden.

In Weiterbildung der Erfindung ist der einstückige Blechstreifen mittels eines topfartigen Blechpressteils gebildet.

Auf diese Weise ist der umlaufende Rand kostengünstig in hohen Stückzahlen herstellbar.

In Weiterbildung der Erfindung ist ein Deckel mit einem Schnurauslass vorgesehen, der mittels eines Scharniers mit der Basis verbunden ist, wobei das Scharnier zwei im wesentlichen parallele Scharnierachsen aufweist, wobei eine erste Scharnierachse relativ zum Deckel und eine zweite Scharnierachse relativ zur Basis festgelegt ist.

Das Vorsehen eines Scharniers mit zwei Scharnierachsen ermöglicht eine kombinierte rotatorische und translatorische Bewegung des Deckels, so dass dieser mit geringem Zwischenraum in den umlaufenden Rand eingepasst werden kann und sich beim Öffnen dennoch nicht im Rand verklemmt.

Das der Erfindung zugrundeliegende Problem wird auch durch eine Unterflurkassette zum Aufnehmen von Gerätebechern mit einer Basis und einem mehreckigen, insbesondere rechteckigen, um die Basis umlaufenden Rand zum Aufnehmen eines Deckels gelöst, wobei eine der Basis abgewandte Kante des Randes von einem Mittelpunkt der Basis weg nach außen zur Bildung eines umlaufenden Schutzrahmens umgebördelt ist, wobei der umlaufende Schutzrahmen gegenüber einem mit der Basis verbundenen Bereich des Randes um mehr als 90° abgebogen ist, wobei der Schutzrahmen fugenlos ausgeführt und aus einer einstückigen Blechplatine gebildet ist und wobei der mit der Basis verbundene Bereich des Randes aus abgebogenen Abschnitten der einstückigen Blechplatine gebildet ist.

Auf diese Weise kann der vollständige umlaufende Rand einstückig ausgebildet werden, wobei speziell der im montierten Zustand auf einer Bodenoberfläche aufliegende Schutzrahmen fugenlos ausgebildet ist. Durch das Abbiegen des Schutzrahmens gegenüber dem umlaufenden Rand wird ein sehr stabiles Randbauteil gebildet. Die Stabilität dieses Randbauteiles ist dabei ganz speziell im Bereich der Ecken sehr hoch, da dort die den Schutzrahmen bildenden einzelnen Flächen in einem Winkel aufeinanderstoßen und an der Stoßstelle eine Biegekante ausbilden. Der mit der Basis zu verbindende Bereich des Randes selber wird ausgehend vom Schutzrahmen abgebogen, so dass dieser Bereich zwar in den Eckbereichen unterbrochen ist, da der Rand jedoch lediglich bei abgehobenen Deckel sichtbar ist, ist dies aus optischer Sicht unkritisch. Dieser Bereich kann dabei bis unmittelbar vor den Eckbereich laufen, so dass im Eckbereich selbst lediglich eine sehr schmale offene Fuge verbleibt. Der Rand kann dann beispielsweise mittels Schrauben an einer Kunststoffbasis gesichert sein oder auch formschlüssig, beispielsweise durch geeignete Raststellen, an der Basis befestigt sein.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine perspektivische Ansicht einer erfindungsgemäßen Unterflurkassette gemäß einer ersten bevorzugten Ausführungsform in auseinandergezogener Darstellung,
- Fig. 2: eine Schnittansicht entlang der Linie II-II der Fig. 1,
- Fig. 3: eine perspektivische Ansicht der Unterflurkassette der Fig. 1 im zusammengebauten Zustand und mit abgenommenem Deckel,
- Fig. 4: eine perspektivische Ansicht einer erfindungsgemäßen Unterflurkassette gemäß einer zweiten bevorzugten Ausführungsform und
- Fig. 5: eine Schnittansicht entlang der Linie V-V der Fig. 4.

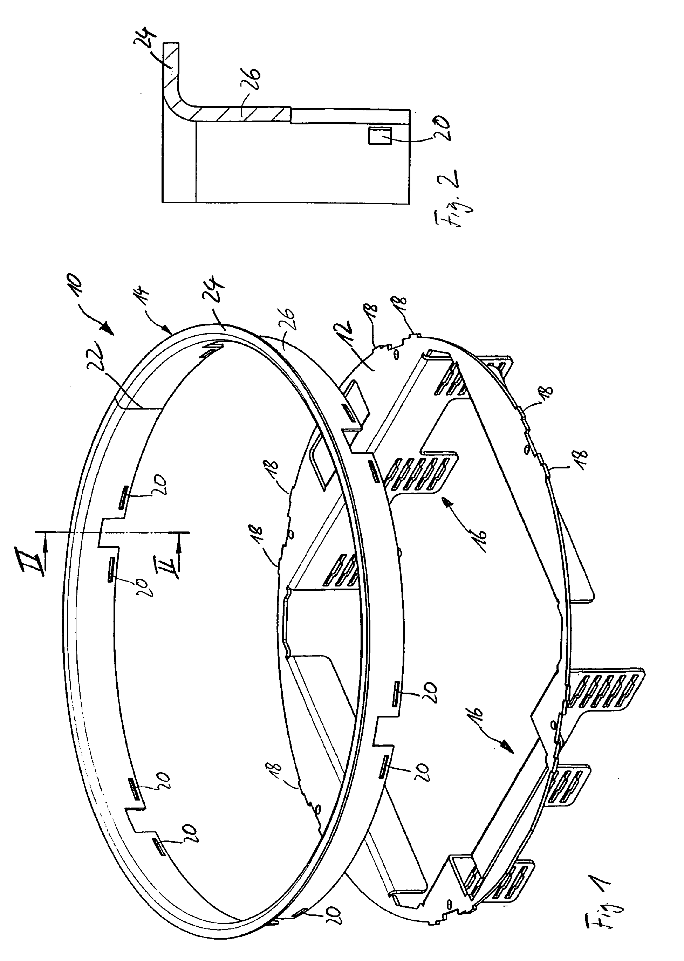

In der perspektivischen Darstellung der Fig. 1 ist eine erfindungsgemäße Unterflurkassette 10 gemäß einer ersten bevorzugten Ausführungsform der Erfindung zu erkennen. Die Unterflurkassette 10 ist dafür vorgesehen, fußbodeneben eingebaut zu werden, beispielsweise in einen Hohlraumboden oder in eine Einbaueinheit eines Installationskanals. Die Unterflurkassette 10 weist eine Basis 12 und einen umlaufenden Rand 14 auf. Der umlaufende Rand 14 definiert eine kreisförmige Ausnehmung, in die ein Deckel eingesetzt werden kann. Sowohl der Rand 14 als auch die Basis 12 sind jeweils als einstückiges Blechbiegeteil ausgebildet. Die Basis 12 besteht aus einer Basisplatte mit einer zentralen Ausnehmung, wobei in die zentrale Ausnehmung hinein Abschnitte der Basisplatte abgebogen sind. An zwei gegenüberliegenden abgebogenen Abschnitten sind Rastleitern 16 zum Einhängen von Gerätebechern ausgebildet.

In der Darstellung der Fig. 1 ist gut zu erkennen, dass die Basis 12 am äußeren Umfang ihrer kreisförmigen Grundplatte mehrere beabstandete Vorsprünge 18 aufweist. Die Vorsprünge 18 haben in der Ebene der Grundplatte gesehen einen rechteckförmigen Querschnitt und verlaufen parallel zur Grundplatte. Die Grundplatte kann mit den Vorsprüngen 18 daher aus einer ebenen Blechplatine ausgeschnitten werden, beispielsweise mittels eines Lasers. Auch die Rastleitern 16 und die weiteren Elemente der Basis können zusammen mit der Grundplatte aus einer Blechplatine ausgeschnitten und dann in die in der Fig. 1 dargestellte Stellung abgebogen werden.

Der Rand 14 besteht aus einem rundgebogenen Blechstreifen und weist im Bereich seiner unteren Kante, die im montierten Zustand am Umfang der Grundplatte der Basis 12 anliegt, mehrere, voneinander beabstandete rechteckförmige Ausnehmungen 20 auf. Die Ausnehmungen 20 sind dafür vorgesehen, die Vorsprünge 18 an der Grundplatte der Basis 12 aufzunehmen und dadurch eine formschlüssige Verbindung zwischen der Basis 12 und dem Rand 14 herzustellen. In der in der Fig. 1 dargestellten Ausführungsform ist der Rand aus einem anfänglich ebenen Blechstreifen geformt und kann daher ebenfalls aus Plattenmaterial mittels eines Lasers ausgeschnitten werden. Dies gilt auch für die Ausnehmungen 20. Die Stirnseiten 22 des Randes 14 liegen in dem in der Fig. 1 dargestellten, nicht montierten Zustand lose aneinander an, so dass der ringförmige Rand 14 im Bereich seiner Stirnseiten 22 noch geringfügig geöffnet werden kann.

Der Rand 14 ist im Bereich seiner von der Basis 12 abgewandten Kante von einem Mittelpunkt der Basis 12 weg nach außen umgebördelt, so dass ein um den Rand 14 umlaufender, ringförmiger Bodenschutzrahmen 24 gebildet ist. Der Rand 14 besteht somit aus einem senkrecht zur Grundplatte der Basis 12 angeordneten Bereich 26 und dem vom Bereich 26 rechtwinklig abgebogenen umlaufenden Schutzrahmen 24.

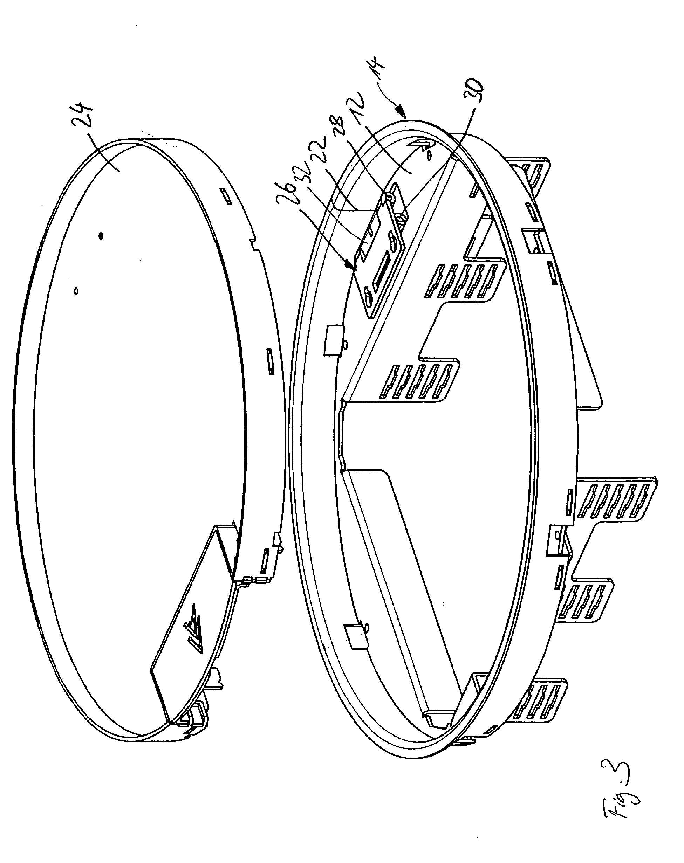

In der Schnittansicht der Fig. 2 ist die Ausbildung des Randes 14 mit dem Bereich 26 und dem Schutzrahmen 24 gut zu erkennen. Im Einbauzustand der Unterflurkassette 10 liegt der Schutzrahmen 24 dann beispielsweise auf einer Bodenoberfläche auf und der Bereich 26 ist senkrecht zur Bodenoberfläche angeordnet.

Durch das Vorsehen des abgebogenen Schutzrahmens 24 ist der umlaufende Rand 14 äußerst formstabil, was insbesondere bei großen Durchmessern von großer Bedeutung ist. Selbst bei härtesten Beanspruchungen im eingebauten Zustand der Unterflurkassette 10 sowie bei rauher Handhabung während und vor der Montage ist es durch die formstabile Ausbildung des Randes 14 nur schwer möglich, diesen so zu beschädigen, dass dieser beispielsweise unrund wird.

Die sehr formstabile Ausführung des Randes 24 ermöglicht es auch, dass zur Montage des Randes 14 an der Basis 12 der ringförmige Rand 14 im Bereich seiner Stirnseiten 22 geringfügig aufgebogen wird und so mit seinen Ausnehmungen 20 über den Vorsprüngen 18 der Basis 12 platziert wird, dass der Rand 14 durch seine Federwirkung selbsttätig auf die Vorsprünge 18 der Basis 12 schnappt. In vorteilhafter Weise kann der Rand 14 auch so ausgebildet sein, dass im montierten Zustand die Unterkante des Randes 14 gegen den Außenumfang der Grundplatte der Basis 12 vorgespannt ist.

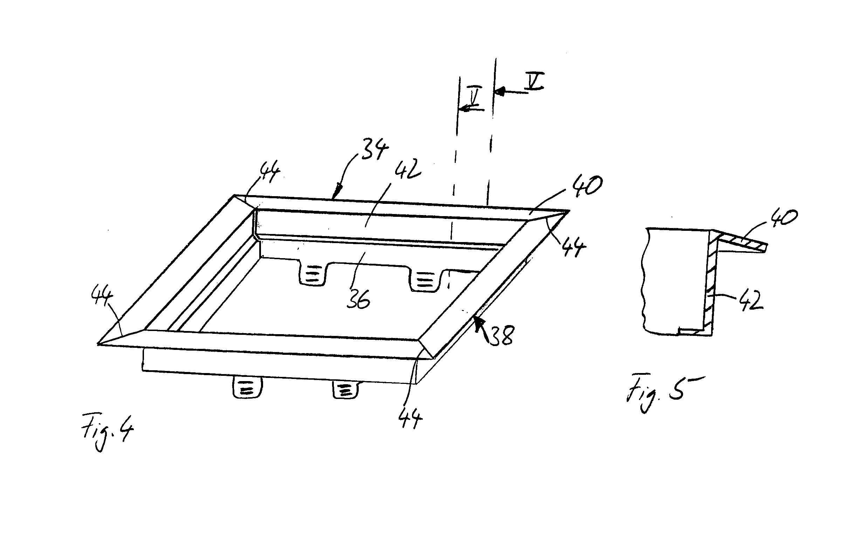

Nachdem der Rand 14 an der Basis 12 montiert ist und die Vorsprünge 18 in den Ausnehmungen 20 aufgenommen sind, wie in der Fig. 3 zu erkennen ist, werden die Stirnseiten 22 des Randes 14 miteinander verschweißt. Der Rand 14 ist dadurch unlösbar an der Basis 12 befestigt.
Insgesamt entsteht durch die sehr formstabile Ausführung des Randes 14 und die formschlüssige, unlösbare Verbindung mit der Basis 12 eine äußerst stabile Unterflurkassette 10, die auch härtesten Beanspruchungen standhält und dabei vergleichsweise einfach herzustellen ist.

In der Darstellung der Fig. 3 ist weiter ein Deckel 24 dargestellt, der mittels eines Scharniers 26 an der Basis 12 angelenkt wird. Der Deckel 24 ist dafür vorgesehen, in der durch den umlaufenden Rand gebildeten kreisförmigen Ausnehmung aufgenommen zu werden. Das Scharnier 26 weist dabei zwei Scharnierachsen 28 und 30 auf. Die Scharnierachsen 28 und 30 sind mittels eines Scharnierarmes 32 miteinander verbunden. Das Scharnier 26 ist dabei so ausgebildet, dass die erste Scharnierachse 28 im montierten Zustand des Deckels 24 relativ zu diesem festgelegt ist und die zweite Scharnierachse 30 stets relativ zur Basis 12 festgelegt ist. Der Deckel 24 kann dadurch eine kombinierte translatorische und rotatorische Bewegung ausführen. Dadurch kann der Deckel 24 mit geringem Abstand in den umlaufenden Rand 14 eingepasst werden und dennoch ist nicht zu befürchten, dass sich der Deckel 24 beim Öffnen am umlaufenden Rand 14 verklemmt.

Die perspektivische Ansicht der Fig. 4 zeigt eine weitere bevorzugte Ausführungsform einer erfindungsgemäßen Unterflurkassette 34. Die Unterflurkassette 34 weist ebenfalls eine Basis 36 und einen umlaufenden Rand 38 auf, wobei der umlaufende Rand 38 quadratisch oder rechteckig ausgeführt ist. Der umlaufende Rand 38 weist einen umlaufenden Schutzrahmenabschnitt 40 auf, der dafür vorgesehen ist, auf einer Bodenoberfläche aufzuliegen. Der Schutzrahmenabschnitt 40 und die Basis 36 sind mittels eines Bereichs 42 des Randes 38 verbunden, der im eingebauten Zustand der Unterflurkassette 34 dann senkrecht zur Bodenoberfläche angeordnet ist.

Wie in der Schnittansicht der Fig. 5 entlang der Linie V-V der Fig. 4 zu erkennen ist, ist der Schutzrahmen 40 dabei um mehr als 90° gegenüber dem Bereich 42 abgebogen. Aufgrund der quadratischen oder rechteckigen Gestaltung des Schutzrahmens 40 entstehen an den Ecken des Schutzrahmens 40 dadurch Biegekanten 44. Die Biegekanten 44 tragen zu einer Stabilisierung des Schutzrahmens 40 gerade in den kritischen Eckbereichen bei. Darüber hinaus entsteht durch die Biegekanten 44 eine sehr formschöne, ästhetisch ansprechende Gestaltung des Schutzrahmens 40.

Der Rand 38 ist aus einer einstückigen Blechplatine gefertigt, so dass der umlaufende Schutzrahmen 40 fugenlos ausgeführt sein kann. Ausgehend vom Schutzrahmen 40 werden dann die Bereiche 42 abgebogen. Die Bereiche 42 sind dadurch im Bereich der Ecken durch eine schmale Fuge voneinander getrennt.

Der umlaufende Rand 38 kann mit der Basis 36 beispielsweise mittels Schrauben verbunden sein, die formschlüssige Verbindung mit der Basis 36, beispielsweise mittels geeigneter Ausnehmungen in den Bereichen 42 und geeigneter Rastelemente an der Basis 36, ist aber ebenfalls möglich. Vorteilhafterweise ist die Basis 36 als Kunststoffspritzteil ausgebildet und der umlaufende Rand 38 als Edelstahlblechbiegeteil ausgeführt.

## Patentansprüche

1. Unterflurkassette zum Anordnen von Gerätebechern und Installationsgeräten mit einer Basis (12) und einem um die Basis (12) umlaufenden Rand (14) zum Aufnehmen eines Deckels (24), wobei der Rand (14) mittels eines einstückigen Blechstreifens ausgebildet ist und mittels passender Vorsprünge (18) und/oder Ausnehmungen (20) an der Basis (12) formschlüssig gesichert ist, **dadurch gekennzeichnet, dass** eine der Basis (12) abgewandte Kante des Blechstreifens von einem Mittelpunkt der Basis (12) weg nach außen umgebördelt ist.

2. Unterflurkassette nach Anspruch 1, **dadurch gekennzeichnet, dass** der den umlaufenden Rand (14) bildende Blechstreifen in einem an der Basis (12) anliegenden, umlaufenden Bereich gegen die Basis (12) vorgespannt ist.

3. Unterflurkassette nach Anspruch 1 oder 2, **dadurch gekennzeichnet, dass** der einstückige Blechstreifen mit verschweißten Stirnseiten (22) ausgebildet ist, wobei die Stirnseiten (22) des Blechstreifens nach dem Sichern des Blechstreifens an der Basis (12) miteinander verschweißt werden.

4. Unterflurkassette nach wenigstens einem der vorstehenden Ansprüche, **dadurch gekennzeichnet, dass** der einstückige Blechstreifen mittels eines topfartigen Blechpressteils gebildet ist.

5. Unterflurkassette nach wenigstens einem der vorstehenden Ansprüche, **dadurch gekennzeichnet, dass** ein Deckel (24) vorgesehen ist, der mittels eines Scharniers (26) mit der Basis (12) verbunden ist, wobei das Scharnier (26) zwei im wesentlichen parallele Scharnierachsen (28, 30) aufweist, wobei eine erste Scharnierachse (28) relativ zum Deckel (24) festgelegt ist und eine zweite Scharnierachse (30) relativ zur Basis (12) festgelegt ist.

6. Unterflurkassette nach wenigstens einem der vorstehenden Ansprüche, **dadurch gekennzeichnet, dass** die der Basis (12) abgewandte Kante des Blechstreifens um einen Winkel von mehr als 90° nach außen abgebogen ist.

7. Unterflurkassette, insbesondere nach einem der vorstehenden Ansprüche, zum Aufnehmen von Gerätebechern und Installationsgeräten, mit einer Basis (36) und einem mehreckigen, insbesondere rechteckigen, um die Basis (36) umlaufenden Rand (38) zum Aufnehmen eines Deckels, wobei eine der Basis (36) abgewandte Kante des umlaufenden Randes (38) von einem Mittelpunkt der Basis (36) weg nach außen zur Bildung eines umlaufenden Schutzrahmens (40) umgebördelt ist, wobei der Schutzrahmen (40) gegenüber einem mit der Basis (36) verbundenen Bereich (42) des Randes (38) um mehr als 90° abgebogen ist und der Schutzrahmen (40) fugenlos aus einer einstückigen Blechplatine gebildet ist, und die mit der Basis (36) verbundene Bereiche (42) des Randes (38) ausgehend vom Schutzrahmen (40) abgebogen sind.
